# EUROPEAN PATENT SPECIFICATION

(11) **EP 1 360 616 B1**
(45) Date of publication and mention of the grant of the patent: **03.11.2010**
(21) Application number: 02710826.5
(22) Date of filing: 01.02.2002
(51) Int. Cl.: G06F 17/30

(54) **DATABASE SYSTEM AND QUERY OPTIMISER**
DATENBANKSYSTEM UND ABFRAGEOPTIMIERUNGSEINHEIT
SYSTEME DE BASE DE DONNEES ET OPTIMISEUR DE DEMANDES

(30) Priority: 01.02.2001 DE 10104831
(43) Date of publication of application: 12.11.2003
(73) Proprietor: SAP AG, 69190 Walldorf (DE)
(72) Inventor: VON BERGEN, Axel, 69168 Wiesloch (DE); SCHWARZ, Arne, 69115 Heidelberg (DE); SAUERMANN, Volker, 69120 Heidelberg (DE)
(86) International application number: PCT/EP2002/001027
(87) International publication number: WO 2002/061613

(56) References cited:
- US-A- 5 355 473
- US-A- 5 557 786
- THEO HÄRDER, ERHARD RAHM: "Datenbanksysteme" 1999 , SPRINGER , HEIDELBERG XP002238738 page 203; figure 7.13 page 207, line 24 -page 210, line 14 page 227 -page 242 figure 7.15 figure 8.1 figure 8.2
- DATE C J : "INTRODUCTION TO DATABASE SYSTEMS, Vol. 1" 1990 , ADDISON WESLEY , READING, MA, US XP002238012 paragraph [03.6] figures 3.17,3.18

## Description

The invention relates to information storage systems, such as database systems. In such computer based data storage systems, data is stored in and retrieved from some medium, such as a memory and a hard disk drive.

The most common way to approach a database is via a database query, for example in the form of a SQL statement. Such a database query is practically always in a compound form, i.e. that it requires at least two conditions to be fulfilled. A search for data that conforms to the query can be done in a number of ways. Often a query optimiser is used, for example a rule based optimiser or a cost based optimiser. The rule based optimiser uses a set of predefined rules. The cost based optimiser uses statistical information about the data to structure queries, by estimating the selectivity of each query component and leading the search path along the most selective components first. Even though using the known optimisers can shorten the average response time, the need exists for optimisers that optimise each specific query.

In known systems, the data is stored in a data structure such as for example a structure based on the relational model. Although data stored using the known data storage systems can be stored, searched and retrieved, the time required for the retrieval can be considerable, especially in case of complex queries. Furthermore, constructing an efficient database structure is complicated and therefore costly. If the design of the database is not up to par, more or less severe performance penalties can easily result. Also, once a database layout or data model is defined, later alterations are difficult to implement, and almost always lead to loss of performance. Therefore the need exists for a database system that can be implemented and altered without introducing unwanted performance restraints.

The first goal is met by providing a query optimiser according to claim 1. By basing a search path decision on a number of hits for each section of a compound query, a search can be guided through the least number of hits first, thus increasing the chance for a quick return of a result for the query. By providing the search structure with additional links that represent data record relations according to claim 1, the optimiser can not only take in account the number of hits of a certain query section but also distil those keys for the search that are most selective.

By providing a data structure according to claim 1, a database structure is achieved that can be implemented without performance restraints, and can be used with the abovementioned query optimiser method. Later alterations are easily achieved without risk of sacrificing performance. By using the data structure of the invention, all advantages of the query optimiser are integrated within the data structure itself. This eliminates the need for a separate search data structure.

Additional features and advantages will become apparent in the following description of a number of embodiments of the invention. Advantageous variants of the invention are subject of the dependent claims.
Fig. 1 shows a database with a table,
Fig. 2 shows an example of a tree structure according to the invention,
Fig. 3 shows another example of a tree structure according to the invention,
Fig. 4 shows an example of a data structure according to the invention,
Fig. 5 shows a detail of a data structure according to the invention, and
Fig. 6 shows schematically a data element according to the invention.

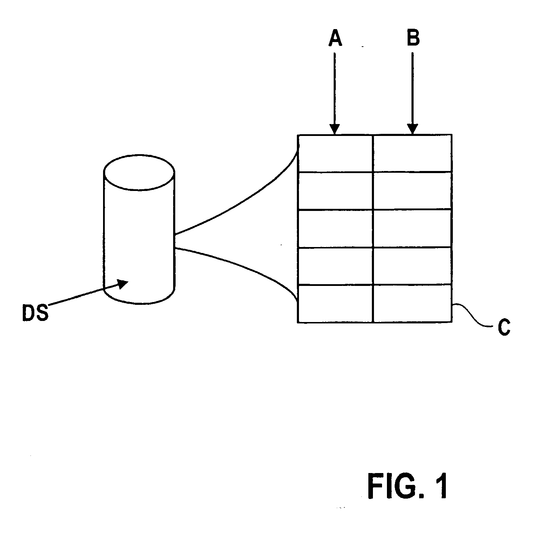

In fig. 1 a first example of an embodiment of the invention is shown. A data source DS (which can be for example a database or an application) containing data is shown, with a small portion of stored data in the form of a table C with columns A and B, comprised of data elements. Note that the data source DS can be of any kind, and that the table C is shown as an example.

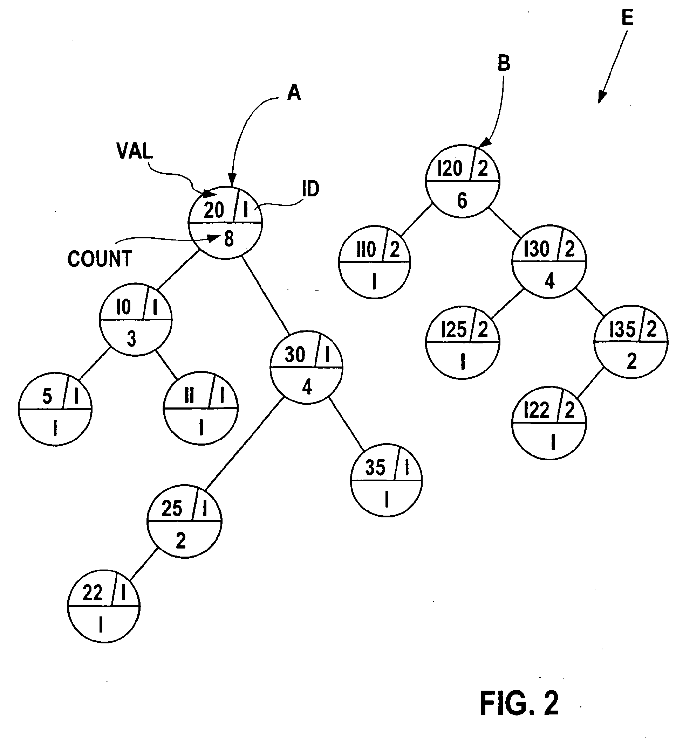

According to the invention, an external data structure E is formed as shown in fig. 2. For convenience the data structure E is called a search data structure, as it will be used to perform searches on it to analyse the structure based on a data query. In the data structure E, the elements of the respective columns A and B are organized in a binary tree structure. The elements of the trees are shown as circles in the fig. 2, with in the upper left part the value of the attribute (VAL), in the upper right part a unique identification of the type of element (ID) and in the lower part a number (COUNT) that at least represents how many elements are present in the branches below the respective element. Note that in this example the lower number is inclusive of the respective element itself. If in the column A or B, multiple entries exist for a certain instance, then these are accounted for by increasing the number COUNT with the number of respective entries. When elements are added or deleted from the tree, the COUNT numbers have to be updated in the tree.

The data can be transferred from the data source DS to the implementation of the program of the invention in any suitable way, for example via a data communication link, such as the Internet, and the data structure to the invention can be build in any suitable way. Preferably, the search data structure is stored in a memory that can be randomly accessed, such as for example RAM, which gives fast access times.

In this example, only a very small section of a data source DS is shown. In practice, a great number of columns are used (and therefore also a corresponding number of trees), and similar a great number of tables or similar constructions are used. Furthermore, the trees will be in the implementation accessible through some means, for example a linking element such as a pointer, that is positioned in hierarchy over the tree structures. The linking means itself can be part of a further configuration to facilitate access to the tree structures.

When a query for a search in the data source DS is requested in the form of a compound query for example Q1 AND Q2 AND Q3 (wherein the conditions Q1, Q2, Q3 are sections that are each a more or less selective statement for a search in the database), a query optimiser according to the invention will conduct a search on the data structure E as follows. For each section of the query (i.e. Q1, Q2, Q3), the number of hits is determined by descending along a path the respective braches of the tree A, B until the required element or elements have been found, and the number of hits can be calculated from the respective values COUNT. The number of elements that meet the criterion can be obtained straightforward from the COUNT parameter of the element found itself, or by simple addition and/or subtraction of multiple elements found. It is therefore not necessary to traverse the complete tree to the end to obtain the data required. Note that searching through a (binary) tree as such is known in the art, as well are searches for ranges in a (binary) tree.

As a result the number of hits for each respective component Q1, Q2, Q3 are known; based on this information the optimiser can select an order in which to execute the query, preferably starting with the component that has the lowest number of hits, as this is potentially the most selective condition. The number of hits per component can also be used in any other way for optimising, including combining or using it together with other criteria.

In this example it is not required that the structure E is updated in real-time. Depending on the rate with which the data changes in the data source DS, the structure E can be updated periodically, like for example hourly or daily. By not having a fully up to date structure E, an error is introduced as not the exact actual number of hits for the data source DS-is calculated, but if the error is kept within predetermined ranges the estimate can be effectively used. A periodical update has the advantage that it does not require so many resources as a real-time update would cost.

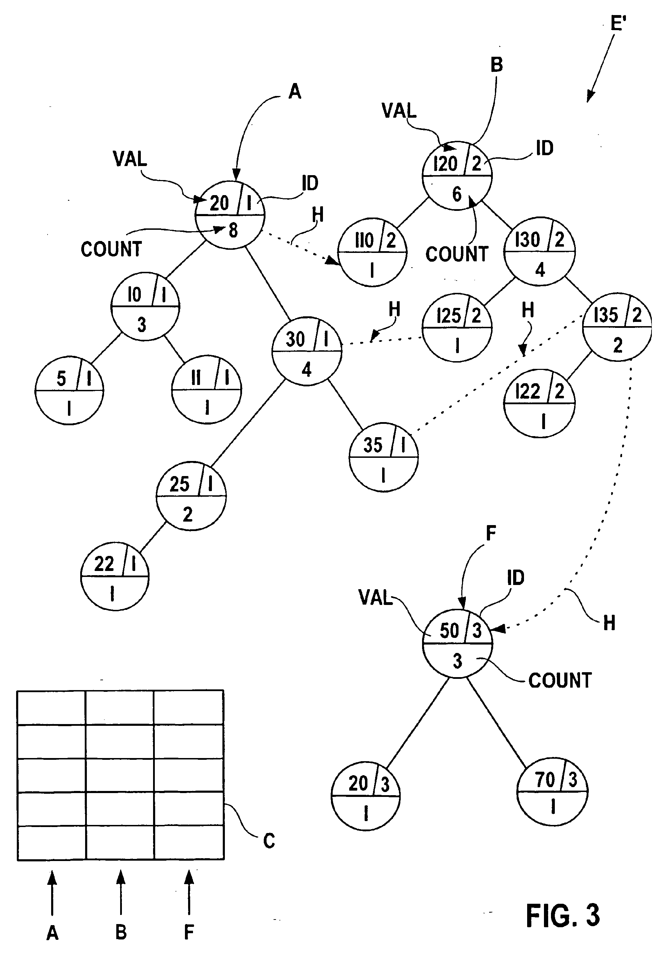

In a further embodiment of the invention, not only the number of elements, but also the relations between elements is included into the structure, now shown in fig. 3 as E'. The linking elements H are shown by dotted lines and represent the data as incorporated for example in a record; the dotted line represents the connection between the fields of a record. The linking element can for example be implemented as a pointer. A further tree F is shown, this tree represents a further column of the table C. As is shown in fig. 3, the subsequent columns of the table C are arranged in a tree structure, being sorted over the respective ID numbers. This has the advantage that access to the respective trees A, B, F can be made very fast and efficient.

When analysing the query components, not only the number of hits can be calculated, but also the most selective keys can be found, wherein any key can be selected. The query optimiser would as result return query components in an optimum order, wherein the query components are not necessarily the same as those in the original query. With the new query, the data source DS can be searched. By using this implementation a quick and efficient way to get the optimum query keys is provided.

Preferably, every tree is identified by an integer value for its identification (ID), and also its elements are preferably identified by an integer or other simple identifier type. This has the advantage that during the search only relatively simple (and therefore fast) comparisons have to be made.

Note that in fact it is not essential to have a binary tree; the invention can also be applied for example with AVL trees, 2-3 trees, B-trees, and splay trees, and in principle any data structure that allows range searching. However, a binary tree (and in particular a balanced tree) promises the fastest overall access time, and is relatively easy to implement and use.

In the previous shown examples, the invention was used together with a separate data source. This has certain benefits, such as the fact that an already existing database system can be used, and the application can be used separately from the main data source. In a further embodiment of the invention, the search database of the second example is augmented with certain features to obtain a database structure in which data can be stored and retrieved, while incorporating the advantages of the fast query optimiser.

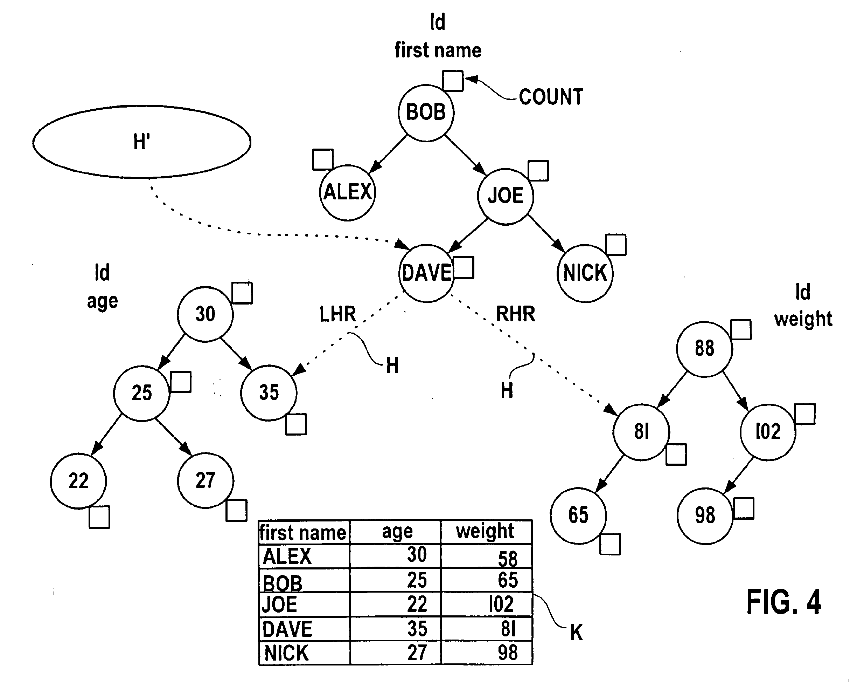

In fig. 4 a table K is shown with three columns, respectively first name, age, and weight. In the database structure according to the invention, each column is organised in a binary tree, preferably a balanced AVL tree. The tree is composed of cells that contain the data of the table. The connection between individual cells in the respective trees, that is the connection that makes up a line (or data record) in the table, is made via the structure H'. This structure H', for example made out of pointers, connects the respective cells of neighbouring trees. Note that the structure H' also forms a tree that is sorted over the identity of the respective trees that represent columns of the table. As in the previous example, each cell is provided with a COUNT parameter, shown as a box next to each cell. As before, the COUNT parameter represents how many elements are present in the branches below the respective element.

Using the structure according to the invention, data can be stored in a database without imposing rigid structures in the form of keys. The structure according to the invention can be expanded, amended and revised by simply adding trees and connections, without compromising performance. The parameters needed for the quick search routine are included in the data structure, and therefore the abovementioned examples of query optimisers can be used without restriction on the database structure. There is no need to build a secondary search database structure.

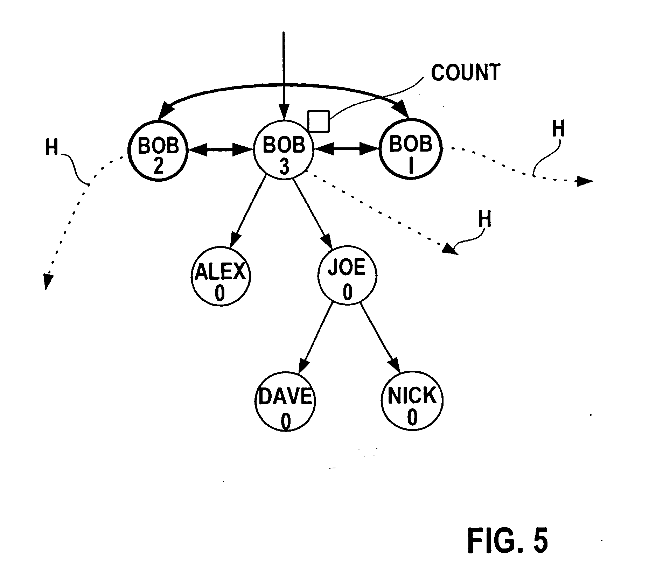

In the previous example, the elements of a tree are all different. Although this can be the case for some applications, most data to be stored will have multiple identical entries. For this situation, the construction as shown in fig. 5 is used. In this example, the entry Bob occurs three times. During the construction of the data structure, each successive cell for Bob is put next to the cell already there and connected to the others via a pointer ring, or so called self-ring. In the shown example the pointer ring is bi-directional; a unidirectional ring would suffice, but a bi-directional architecture has advantages in the navigation through the ring. The cell that was added latest is directly part of the tree structure. To distinguish between cells of the tree structure that have neighbours in a self-ring and those that do not, each cell is provided with a variable as shown in the lower section of the cells in fig. 5. The value 0 indicates in this case that the cell does not have neighbours, i.e. no multiple occurrences are present. As shown in the fig. 5, each cell within a ring maintains its link to the next tree, as indicated by the dotted lines. In this way the structure fully maintains all data information. Furthermore, the COUNT parameter has to be adjusted for any multiple occurrences due to a ring, so to maintain that the COUNT parameter represents how many cells are present in the branches below the respective cell. The COUNT parameter can also include the number of elements in a self-ring. The self-ring configuration can also be used with the search method shown in the first two examples.

To further make the data structure accessible, all the end elements of the tree structure are provided with linking elements that point towards the upper or start section of the respective tree. Pointers are an efficient way to implement these linking elements. The linking elements provide a ring structure to the trees and make navigating through the structure easier to implement, and in case pointers are used prevent that nil pointers occur.

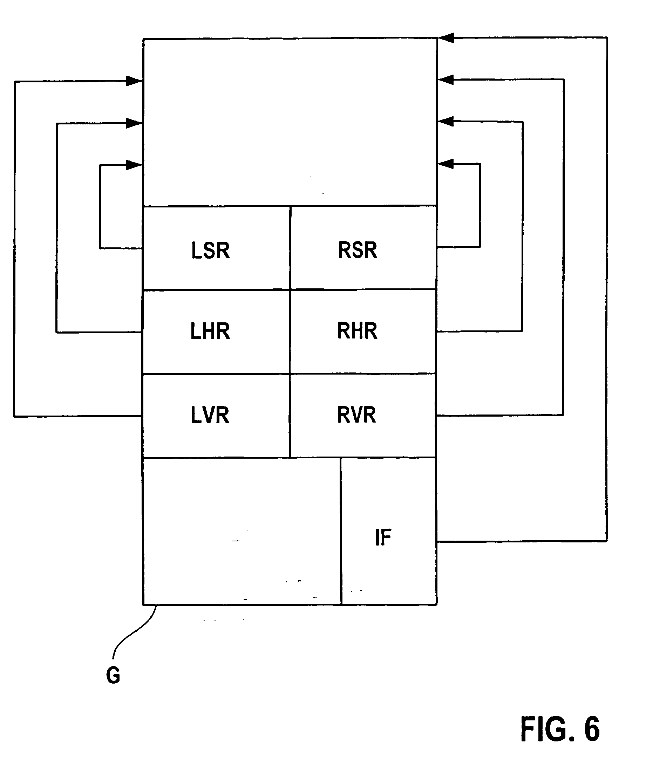

To implement the data structure use can be made of a data element G according to the invention as shown in fig. 6. This data element can be used universally throughout the data structure, and can be changed to leave out features or include extra features when required. Note that the invention is not limited to this specific data type, and that other implementations can be used.

The data element is shown schematically in fig. 6. The element G is provided with three pairs of pointers and a single pointer. The pointers of the first pair are labelled LVR and RVR (Left Vertical Ring, respectively Right Vertical Ring), the pointers of the second pair are labelled LHR and RHR (Left Horizontal Ring, respectively Right Horizontal Ring), the pointers of the third pair are labelled LSR and RSR (Left Self Ring, respectively Right Self Ring), and the single pointer is labelled IF (Information bridge). The LVR/RVR pair can be used for the tree structure for that incorporates elements of the same type. The LHR/RHR pair can be used to connect an element to neighbouring trees. The LSR/RSR pair can be used to include similar elements into a self-ring structure.

In the initial state as shown in fig. 6 all pointers point to the data element itself. When adding or inserting elements to the structure, the pointers are redirected so that a ring configuration is maintained, so that every pointer in the structure has a valid address, and cases of a non-defined pointer (nil pointer) are avoided. Additionally, the data element can be provided with several parameter values. The IF pointer can be used for connections with any other instance within the data structure; for example an other element of the same or another tree or even elements of one or more levels higher in hierarchy. The IF pointer can be used for example as an InfoBridge; that is a connection element that looks like a Y-adapter. This InfoBridge can be cascaded and/or be bi-directional. With the InfoBridge, any internal data structure can be build within the context of the data structure of the invention.

In this example, only a very small section of a database is shown. In practice, a great number of columns are used (and therefore also a corresponding number of trees), and similar a great number of tables or similar constructions are used. Furthermore, the trees will in the implementation be accessible through some means, for example a linking element such as a pointer, which linking means itself can be part of a further configuration to facilitate access to the tree structures.

The implementation of the data structure and method according to the invention is not limited to the example shown, but can be achieved using any known and suitable manner. Typically, the invention will be implemented as a computer program that is stored in a computer memory or on a data carrier. The program has program code sections that when run on a computer system will perform the steps of the method according to the invention. The implementation of the system as described above can be made using any known and suitable method and programming language. It is helpful if the language of the implementation supports pointers. It is also useful if the programming language is object orientated, for example C++, which language has the additional benefits of availability of pointers, objects, and object classes. For most implementations additional control structures would be necessary, comprising temporary elements. However, such implementation details as such are known and are within reach of the person skilled in the art.

The data structure according to the invention can be implemented in particularly in a memory that can be randomly accessed (such as for example a memory of the RAM type), wherein the addresses can be randomly accessed. The use of a random access memory also has the advantage that changes to the data structure do not effect efficiency in any way. Although the invention is preferably implemented in a memory with random access, the implementation is not limited to this form, and other implementations in memory devices are possible.

## Claims

1. Method for optimising a query with respect to a database structure, comprising:
receiving database information with respect to a specific data source (DS),
generating a search database structure (E) for said data source (DS) by organizing data elements of the same type in respective tree structures (A, B), based on said received data source information, wherein each data element of a tree has a number (COUNT) representative of the number of data elements arranged in the tree structure (A, B) under said respective data element, and wherein multiple identical elements of a specific tree structure are added in cells such that a latest added cell is directly a data element of the specific tree structure and the cells for the multiple identical elements are connected to each other via a pointer ring, wherein the number (COUNT) of the latest added cell is adjusted by also including the number of cells in the pointer ring,
receiving a query request for said data source (DS),
analyzing the search database structure (E) by counting a number of hits for respective sections of said query request, and
calculating an optimized query request by basing a search path decision on a number of hits for each section of a compound query, wherein the number of hits is calculated from the number (COUNT) representative of the number of data elements arranged in the tree structure (A, B)..

2. Method according to claim 1, further comprising linking elements of a first tree (A) with elements of a second tree (B) via linking elements (H), wherein a linking element represents a data record relation.

3. Method according to claim 2, further comprising
determining a key set for the optimized query request.

4. Computer program product, comprising code portions for executing when loaded into a computer memory the steps of a method according to any of the claims 1-3.

## Patentansprüche

1. Verfahren zum Optimieren einer Abfrage mit Bezug auf eine Datenbankstruktur, mit den folgenden Schritten:
Empfangen von Datenbankinformationen mit Bezug auf eine spezifische Datenquelle (DS),
Erzeugen einer Suchdatenbankstruktur (E) für die Datenquelle (DS) durch Organisieren von Datenalementen desselben Typs in jeweiligen Baumstrukturen (A, B) auf der Basis der empfangenen Datenquelleninformationen, wobei jedes Datenelement eines Baums eine Zahl (COUNT) aufweist, die die Anzahl der in der Baumstruktur (A, B) unter dem jeweiligen Datenelement angeordneten Datenelemente repräsentiert, und
wobei mehrere identische Elemente einer spezifischen Baumstruktur in Zellen dergestalt hinzugefügt werden, dass eine zuletzt hinzugefügte Zelle direkt ein Datenelement der spezifischen Baumstruktur ist und die Zellen für die mehreren identischen Elemente über einen Zeigerring miteinander verbunden werden, wobei die Zahl (COUNT) der zuletzt hinzugefügten Zelle justiert wird, indem auch die Anzahl der Zellen in dem Zeigerring mit eingeschossen wird, Empfangen einer Abfrageanforderung für die Datenquelle (DS),
Analysieren der Suchdatenbankstruktur (E) durch Zählen einer Anzahl von Treffern für jeweilige Teile der Abfrageanforderung und
Berechnen einer optimierten Abfrageanforderung durch Basieren einer Suchpfadentscheidung auf einer Anzahl von Treffern für jeden Teil einer zusammengesetzten Abfrage, wobei die Anzahl der Treffer aus der Zahl (COUNT) berechnet wird, die die Anzahl der in der Baumstruktur (A, B) angeordneten Datenelemente repräsentiert.

2. Verfahren nach Anspruch 1, ferner mit dem Schritt des Verknüpfens von Elementen eines ersten Baums (A) mit Elementen eines zweiten Baums (B) über verknüpfende Elemente (H), wobei ein verknüpfendes Element eine Datensatzrelation repräsentiert.

3. Verfahren nach Anspruch 2, ferner mit dem Schritt des Bestimmens einer Schlüsselmenge für die optimierte Abfrageanforderung.

4. Computerprogrammprodukt, das Codeteile zur Ausführung der Schritte eines Verfahrens nach einem der Ansprüche 1-3, wenn sie in einem Computerspeicher geladen werden, umfasst.

## Revendications

1. Procédé d'optimisation d'une requête vis-à-vis d'une structure de base de données, consistant à :
recevoir des informations de base de données concernant une source de données (DS) spécifique,
générer une structure de base de données (E) de recherche pour ladite source de données (DS) en organisant des éléments de données du même type dans des structures arborescentes (A, B) respectives sur la base desdites informations de sources de données reçues, dans lequel chaque élément de données d'une arborescence comporte un nombre (COUNT) représentatif du nombre d'éléments de données présents dans la structure arborescente (A, B) en dessous dudit élément de données respectif, et dans lequel de multiples éléments identiques d'une structure arborescente spécifique sont ajoutés dans des cellules de façon que la dernière cellule ajoutée soit directement un élément de données de la structure arborescente spécifique et
que les cellules correspondant aux multiples éléments identiques soient connectées les unes aux autres par l'intermédiaire d'un anneau de pointeurs, dans lequel le nombre (COUNT) de la dernière cellule ajoutée est ajusté en incluant également le nombre de cellules dans l'anneau de pointeurs,
recevoir une demande de requête portant sur ladite source de données (DS),
analyser la structure de base de données de recherche (E) en comptant un nombre d'occurrences pour des sections respectives de ladite demande de requête, et
calculer une demande de requête optimisée en basant une décision concernant le trajet de recherche sur un nombre d'occurrences pour chaque section d'une requête composite, le nombre d'occurrences étant calculé à partir du nombre (COUNT) représentatif du nombre d'éléments de données présents dans la structure arborescente (A, B).

2. Procédé selon la revendication 1, consistant en outre à lier des éléments d'une première arborescence (A) à des éléments d'une seconde arborescence (B) par l'intermédiaire d'éléments de liaison (H), un élément de liaison représentant une relation entre enregistrements de données.

3. Procédé selon la revendication 2, consistant en outre à déterminer un ensemble de clés pour la demande de requête optimisée.

4. Produit de programme informatique comprenant des parties de code destinées à exécuter, lorsqu'elles sont chargées dans la mémoire d'un ordinateur, les étapes d'un procédé selon l'une quelconque des revendications 1 à 3.
